# EUROPEAN PATENT APPLICATION

(11) **EP 2 617 617 A2**
(43) Date of publication of application: **24.07.2013**
(21) Application number: 13150392.2
(22) Date of filing: 07.01.2013
(51) Int. Cl.: B60W 10/06, B60W 10/08, B60W 10/30, B60W 30/14, B60W 20/00, B60W 50/00, B60W 10/24, G08G 5/00, G06Q 10/04, G01C 21/34

(54) **Vehicle energy and power management method and system**

(30) Priority: 17.01.2012 GB 201200700
(71) Applicant: Rolls-Royce plc, London SW1E 6AT (GB)
(72) Inventor: Wall, Derek, Bristol, South Gloucestershire BS34 6RW (GB); Self, Kristian, Bristol, South Gloucestershire BS7 8SP (GB); Adgar, Stephen, Bristol, South Gloucestershire BS15 8JN (GB)
(74) Representative: Hartley, Andrew Colin

(57) **Abstract**

A method of managing energy and/or power in a vehicle, the vehicle comprising: one or more vehicle power systems (108) adapted to control one or more power consuming components of the vehicle and one or more power producing components of the vehicle; and one or more propulsive power systems (108) adapted to control a propulsive power unit of the vehicle, wherein the method comprises: (i) proposing a vehicle route for a predetermined mission and/or destination (201, 203); (ii) determining a time-based operational plan for each of the vehicle power consuming components based on the requirements of the proposed vehicle route (203); (iii) determining the power required by the vehicle power consuming components and the propulsive power required by the vehicle as a function of time during the operational plan (202, 208, 205); (iv) determining the power required from the vehicle power producing components and the propulsive power required by the propulsive power unit as a function of time during the operational plan (206, 207, 208, 209); and (v) varying the proposed vehicle route and/or the operational plan and repeating at least steps (iii) to (iv) to optimise a predetermined performance criterion for the vehicle (210).

## Description

This invention relates to a power management method and system for a vehicle and particularly but not exclusively relates to a power management method and system for an aircraft.

### Background

Traditional power management in multi-engine applications, e.g. for an aircraft, may for example comprise a direct independent throttle engine power demand from a human operator (e.g. mechanical linkage from a throttle to a mechanical fuel metering device), or an independent engine Full Authority Digital Engine (or Electronics) Control (FADEC), which provides automatic fuel scheduling, limiting, monitoring and protection. This demand may correspond to a control parameter representing power (propulsive thrust) demand, for example, a spool speed or non-dimensionalised parameter such as a Turbofan Pressure Ratio (TPR) since this control parameter is strongly related to vehicle thrust, and is also influenced by environmental factors.

In some cases the individual demand from the pilot or system manager is augmented by a droop feedback loop. Droop feedback allows an offset from the pilot's demand by feeding back a change (e.g. a Delta) on the demand signal (typically as a function of how hard the engine is working) to prevent one engine taking more load than another. On some helicopters, this is augmented further still by sharing data on the relative difference in torque between engines to manage the load sharing.

Building on the above-mentioned systems, conceptual studies have looked at the impact of distributed power and thrust for single (multi-spool) engines, some of which have looked at using novel software techniques such as intelligent agents to manage this distribution. These studies were conducted in a modelled environment and the scope was typically engine-centric (i.e. it assumed a simple throttle/power demand input from the vehicle, from which the engine appropriated the best use of resources). This approach assumed a real-time approach to power distribution. However, these studies have met with limited success.

More recently, through the Autonomous Systems Technology Related Airborne Evaluation & Assessment (ASTRAEA) research program, the applicant of the present application explored concepts of centralised power control across multiple engines, and filed patent application GB2462180, which addressed vehicle-power system integration and optimisation. In the ASTRAEA concept, the vehicle understood the limits of power it could tolerate for a particular mission leg. This information was then passed to the power system to plan and decide where and how to deliver this in a power-optimised way, whilst accounting for system health and the (time-varying) limits allocated by the vehicle.

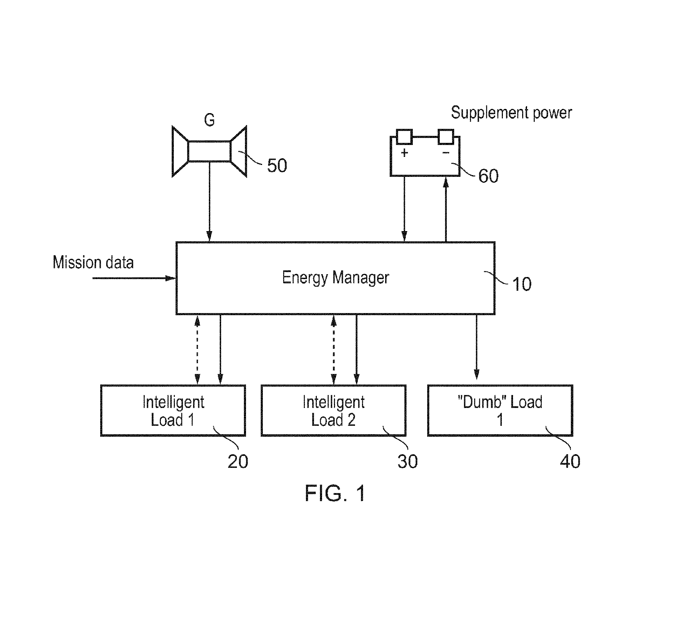

There are a number of other proposals which aim to take this further. For example, centralised management of power generation and loads at a vehicle level have been considered. Notably, WO2010/047902 describes a system which is aware of its mission in advance and is able to plan the optimum scheduling and usage of its loads and power generation and storage devices. An outline of this approach is depicted in Figure 1 in which an energy manager 10 communicates with first and second intelligent loads 20, 30, a dumb load 40, a generator 50 and a supplementary power source 60. The energy manger 10 receives mission data and based on the mission data distributes the power resources to the loads 20, 30, 40 in an optimal manner.

However, the applicant is not aware of a power system which will deliver an holistic power management solution for an autonomous vehicle. (By way of example, an holistic power management system in the case of an aircraft would consider propulsion, electrical load-capacity balance, scheduling of events or routes to optimise energy usage and take account of external influences such as prevailing conditions or terrain.) For example, whilst some concepts focus on the low-level administration of power (in some cases attempting to use novel software techniques), they do not address the whole power management problem for the entire vehicle. Some concepts manage the overall administration of power generation, but focus on one aspect alone (e.g. thrust as disclosed in GB2462180 or electrical load/storage alone as in W02010/047902).

In addition to the above, other previous concepts assume a vehicle-centralised approach to power management, which would require a single system having total domain knowledge of all of the constituent elements (i.e. across power plant provider, airframe, and airframe sub-systems providers in the case of an aircraft). However, this is unlikely to be acceptable for each of the respective manufacturers since they will be reluctant to share their proprietary information, e.g. detailed performance data. Furthermore, such an approach does not facilitate adaptation to different platforms or subsystems.

Where attempts have been made to develop architectures which do consider the holistic power challenge, such systems have inherent conflicts. For example, a subsystem optimising for a best-route may wish to extend a mission leg to accommodate a circumnavigation of a hill, whereas an environment-load optimising sub-system may wish to reduce the same mission leg to avoid struggling into a prevailing headwind. To date such tensions in an intelligent power management system may only be resolved by holistic domain knowledge, but this requires knowledge of proprietary information, which, as mentioned above, is unlikely to be forthcoming.

The present disclosure therefore seeks to address the aforementioned issues.

### Statements of Invention

According to a first aspect of the present invention there is provided a method of managing energy and/or power in a vehicle, the vehicle comprising: one or more vehicle power systems adapted to control one or more power consuming components of the vehicle and one or more power producing components of the vehicle; and one or more propulsive power systems adapted to control one or more propulsive power units of the vehicle, wherein the method comprises:
(i) proposing a vehicle route for a predetermined mission and/or destination;
(ii) determining a time-based operational plan for each of the vehicle power consuming components, e.g. based on the requirements of the proposed vehicle route or mission;
(iii) determining the power required by the vehicle power consuming components and the propulsive power required by the vehicle as a function of time during the operational plan;
(iv) determining the power required from the vehicle power producing components and the propulsive power required by the propulsive power units as a function of time during the operational plan; and
(v) varying the proposed vehicle route and/or the operational plan and repeating at least steps (iii) to (iv) to optimise a predetermined performance criterion for the vehicle.

The steps (i) to (v) may or may not be carried out one after the other, for example, there may be some degree of overlap between the steps, or they may be carried out in a different order to that described above.

The method may further comprise dividing the operational plan into one or more time phases. Each phase may represent a particular mode of operation for the vehicle. For example, in the case of the vehicle being an aircraft, one or more of the time phases may correspond to taxiing, taking-off, climbing, cruising, descending, landing, taxiing, idling and/or refuelling. The operational plan may be divided into one or more phases prior to proposing the vehicle route. The method may further comprise varying the duration of one or more of the time phases to optimise the predetermined performance criterion.

The mission and/or destination may comprise one or more defined route waypoints.

One or more of the vehicle power systems and/or propulsive power systems may suggest one or more variations to the operational plan in order to further optimise the predetermined performance criterion. The method may subsequently comprise determining whether to adopt one or more of the suggested variations to the operational plan; and varying the operational plan according to one or more of the suggestions from the systems to further optimise the predetermined criterion. The dependency between the other vehicle power systems and/or propulsive power systems may be taken into account. The suggested variations to the operational plan may comprise suggested variations to the duration of one or more of the time phases. For example, by extending a cruise phase by 20 minutes it may be possible for an alternative power producing component to be fully charged, which may enable use of this power producing component to provide power in addition to a primary power source, e.g. to serve planned large transient power demands in the next mission phase.

The vehicle route may be varied independently of varying the scheduled use of the one or more of the propulsive power systems to optimise the predetermined performance criterion for the vehicle. The method may further comprise varying the scheduled use of one or more of the vehicle power systems within the operational plan independently of varying the scheduled use of the one or more of the propulsive power systems to optimise the predetermined performance criterion for the vehicle. For example, in an aircraft system with two gas turbine propulsive power units, electrical vehicle power producing components and electrical vehicle power consuming components, the method may vary the planned route, as well as independently considering variation of the thrust produced by each gas turbine, in addition to independently considering varying the schedule for electrical power generation, or consumption by the power consuming components. Any combination of these variations may be considered, but all variations aim to optimise the performance based criteria, such as fuel consumption.

The method may further comprise varying the scheduled use of one or more of the propulsive power systems within the operational plan independently of varying the scheduled use of the one or more of the vehicle power systems to optimise the predetermined performance criterion for the vehicle. For example, a system with two gas turbine propulsive power units, electrical vehicle power producing components and electrical vehicle power consuming components, the method may determine to increase propulsive power of one gas turbine and reduce power from the other gas turbine to optimise the fuel burn performance criterion, based on a suggestion by the propulsive power system.

One or more power sensors may be queried to determine the vehicle power system and/or propulsive power system power levels. The power sensors may be configured to sense the energy and/or power being consumed or produced by components controlled by the vehicle power system and/or propulsive power system, e.g. by measuring voltages, currents, speeds, torques etc. The power levels, e.g. individual or total power levels, may be accounted for when determining the power required from the vehicle power producing components and/or the propulsive power required from the propulsive power unit as a function of time during the operational plan.

One or more health sensors may be queried to determine the vehicle health, vehicle power system health, power consuming component health, power producing component health, propulsive power system health and/or propulsive power unit health. The health may be accounted for when determining the power required from the vehicle power producing components and/or the propulsive power required from the propulsive power unit as a function of time during the operational plan.

Any of the aforementioned method steps may be carried out whilst the vehicle undergoes the vehicle route. The vehicle route and/or operational plan may be refined, e.g. dynamically, to optimise the predetermined performance criterion for the vehicle, for example, in response to a change in the mission and/or destination during the vehicle route. As a result, the present invention may work with a number of time horizons, for example the present invention may adapt a long term plan to take account of real-time demands.

The method may further comprise predetermining an optimal vehicle route and operational plan prior to commencing the vehicle route. For example, the predetermined optimal route and operational plan may be used as a starting point in steps (i) and (ii) above.

The predetermined performance criterion may be one of energy efficiency, emissions output, vehicle route completion time, persistence of the vehicle, e.g. in the air, or the operational life of the vehicle and/or one or more of the vehicle components or any other performance criterion.

The power consuming components may consume one or more of electrical power, mechanical power, hydraulic power, pneumatic power, propulsive power or any other type of power or combination thereof. The power consuming components may comprise one or more of electrical systems, air conditioning, cabin heaters, cooking heaters, radar guidance systems, cameras, vehicle weapons systems, vehicle defence systems, communications systems, entertainment systems, anti-icing heaters, sensors, hydraulic actuators, pneumatic actuators, electrical actuators, pumps, lighting, aerofoil surfaces, drag inducing surfaces or any other power consuming component.

The power producing components may comprise one or more of an electrical generator, a gas turbine engine, a diesel engine, a solar cell, a wind turbine, a nuclear reactor, a fuel cell, a thermo-electric generator or any other power producing component, e.g. which may provide the means of converting energy.

The propulsive power unit may comprise one or more of a gas turbine engine, a diesel engine (e.g. coupled to a propulsive drive), a turbine (e.g. steam), a motor, sail, or any other source of propulsion.

The vehicle may further comprise energy storage means. The energy storage means may store electrical, mechanical and/or hydraulic energy. For example, the energy storage means may comprise one or more of a battery, a capacitor, a flywheel, an hydraulic accumulator or any other energy storage device. The energy storage means may be accounted for when determining the power required from the vehicle power producing components and the propulsive power required by the propulsive power unit as a function of time during the operational plan.

The vehicle may be an aircraft (civil or military), a marine vessel (e.g. ship or submarine), land-based vehicle (e.g. a car) or any other type of vehicle. The vehicle may be autonomous, e.g. the vehicle may be unmanned or it may have an auto-pilot.

According to a second aspect of the present invention there is provided a system and/or controller, e.g. a central controller, adapted to carry out any combination of the aforementioned methods. For example, such a controller or system may oversee all of the vehicle's energy and/or power planning. A vehicle may comprise such a controller or system.

The present disclosure offers mission level energy and power management technology, primarily, although not exclusively, for autonomous vehicles. The methods and systems disclosed herein may rely on a knowledge of vehicle environmental factors, intended vehicle route, mission plan, power system configuration and power system health to achieve its benefits. Based on this knowledge, a prediction of required vehicle energy requirements and a consequent planned mission energy supply are derived. The planned energy supply is optimised against a customer (vehicle) criteria (or cost function). The technology may offer dynamic in-mission re-planning in response to a change in any of the environment factors listed or change in the mission plan, vehicle route or power system health.

The present disclosure improves upon the previously-proposed autonomous power management systems (e.g. GB2462180) by iteratively interacting with the whole vehicle's systems and converging on a compromise. In doing so, the present disclosure enables improved optimisation where previously the power system optimisation was constrained to the power system's domain.

The present disclosure may advantageously provide a means to exploit previously inaccessible optimisation of vehicle power, without requiring the transfer of confidential performance data for the vehicle and/or subsystems. A scalable, flexible interface which supports any vehicle platform architecture, from simple throttle demand, all the way up to power profile and feedback-advisory for convergent optimisation may also be provided.

Furthermore, the present disclosure considers the holistic power domain (for example, all energy and/or power loads, the propulsive demand, electrical, hydraulic, pneumatic, health/parasitic losses, energy scavenging and harvesting, adverse or beneficial environmental factors and route) and optimises the plan based on an initial mission, but may dynamically respond with an updated plan as the situation (e.g. health, environment) and/or mission evolve.

The methods and systems disclosed herein may also automatically reconfigure the operational plan in response to changes to the load or sensor subsystems (e.g. as a result of maintenance) to provide energy supply re-planning during a vehicle journey. The ability to automatically reconfigure and re-plan the power supply accordingly offers enhanced flexibility. The energy supply planning may also take account of the particular characteristics of each power source (e.g. start up time and profile, shutdown needs) and power sink (electrical load profile against time, required power supply quality etc).

Further advantages include reduced operating cost and reduced risk. For example, an optimised power supply may reduce fuel consumption and/or reduce maintenance cost (e.g. via better health management of power system components). Furthermore, the ability to autonomously manage occurrences in mission, changes to environmental conditions and changes to the mission plan reduces the chance of mission aborts and minimises risk.

### Brief Description of the Drawings

For a better understanding of the present invention, and to show more clearly how it may be carried into effect, reference will now be made, by way of example, to the accompanying drawings, in which:-
Figure 1 shows a prior art power management system;
Figure 2 is a contextual diagram showing the Intelligent Power Manager (IPM) in its environment;
Figure 3 is an architectural schematic diagram of the IPM; and
Figure 4 outlines an iterative sequence for the IPM.

### Detailed Description

The present disclosure relates to a method comprising concurrent processing and arbitration to optimise power consumption in a vehicle. More specifically, the present disclosure may relate to an iterative convergence on an optimal solution and may use a common language across sub-system boundaries. Accordingly a system architecture and method are disclosed herein.

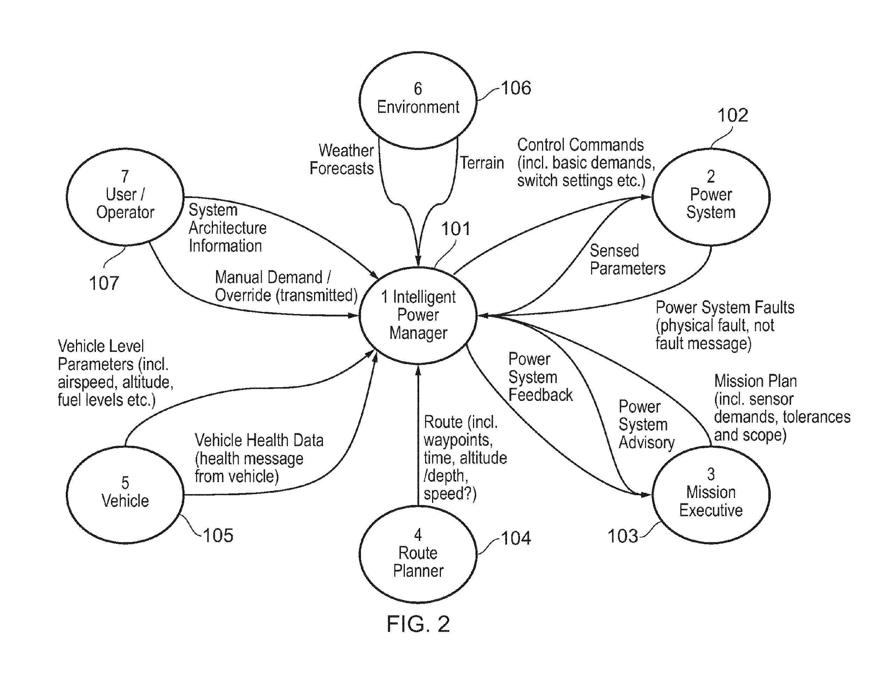

The present disclosure may relate to a hierarchical architecture for an autonomous vehicle and its subsystems (e.g. as shown in Figure 2). One of the proposed subsystems on such a vehicle is the Intelligent Power Manager (IPM) 101, which is responsible for the planning, scheduling and control of all of the power sources and sinks on the vehicle. It is the IPM functionality and its interactions with the wider vehicle architecture that are the subject of this invention.

With reference to Figure 2, a conceptual representation of the IPM system 101 within its environment is shown. The key inputs and outputs are identified. For example, the IPM 101 receives data from: a vehicle 105 (e.g. vehicle health, fuel levels, air speed, altitude etc), the environment 106 (e.g. terrain, meteorological data), the route planner 104 (specified waypoints, tolerances, etc) and from the power system 102 (health and status data).

Furthermore, the IPM 101 interacts with the Mission Executive (ME) 103, which is the highest level of decision making authority within the vehicle system. The ME 103 provides information on the nature of the current mission such as specific mission phases, their duration and tolerance, which sensors or payloads to deploy and when, and the preferred characteristic against which to optimise, etc. Finally, the IPM 101 may also interact with a user 107, for example to receive system architecture information, such as in the case where certain vehicle mission systems are configurable to suit the particular mission, or manual demand or override instructions. Status information may also be transmitted to the user 107.

The IPM 101 combines all of the incoming data together to generate a planned course of action to best deploy the available power sources and sinks, which it outputs as an advisory to the ME 103 and as a demand upon the various power sub-systems 102. Accordingly, the key functions to be performed by the IPM 101 are: to predict the power demand; plan and optimise the power supply; control the power systems; manage the power system health (including contingency management); and manage communication and data.

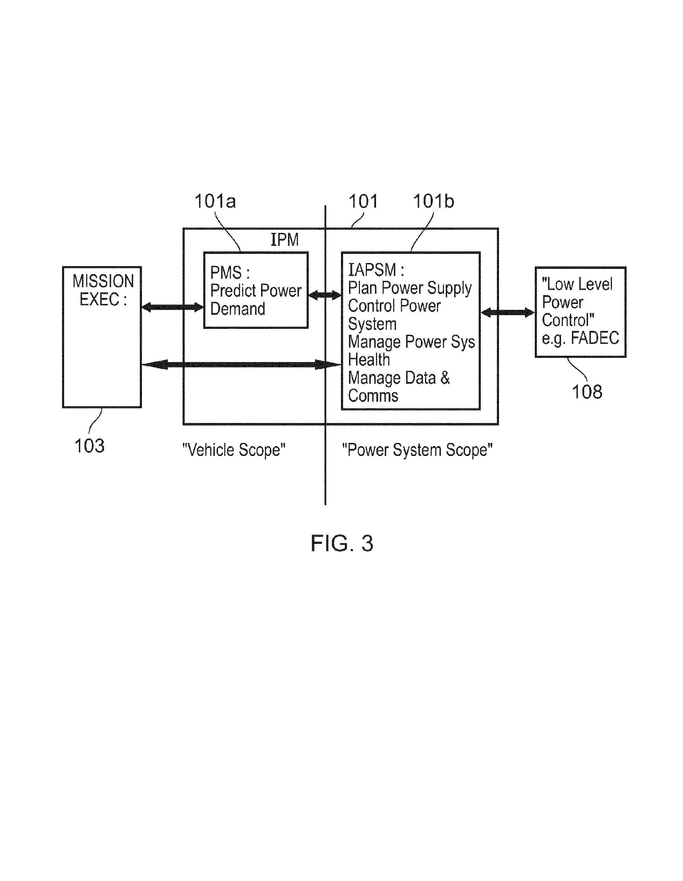

With reference to Figure 3, an architectural schematic of the IPM 101 is shown. As depicted, the IPM 101 may comprise two separate components: a vehicle-domain comprising a Power Management System (PMS) 101a; and a power system domain comprising an Intelligent Adaptive Power System Manager (IAPSM) 101b. The PMS 101a predicts the power demand from the vehicle, whilst the IAPSM 101b plans the power supply to the vehicle to meet the power demand. The IAPSM 101b may also manage the power systems health, manage data and communications and control the power systems, for example through a low level power control such as a FADEC 108. The power systems may comprise power consuming systems and not just power producing systems.

A key architectural feature of the PMS 101a is that the "Predict Power Demand" function resides within the vehicle provider's scope of supply, whilst the remaining functions of the IAPSM 101b reside within the power system provider's scope of supply. The reason for this separation is that the data the PMS and IAPSM require is domain specific and subject to the respective system provider's Intellectual Property. For example, the derivation of a power demand from route data will require use of the proprietary vehicle performance data (drag coefficients, performance characteristics etc). Likewise, calculation of a power system's projected capability to generate power will also depend on proprietary design data. Thus the IPM 101 functionality may reside in separate parts in order to maintain the domain specific Intellectual Property Rights (although physically these aspects may be co-located).

A further advantage of the split functional architecture described above is that it is scalable, for example to support a wide variety of potential applications of the IAPSM (and hence Power system provider's scope of supply) with minimal change. In its simplest form, the IAPSM may receive conventional demands (throttle, electrical load requests) and may be able to do some internal optimisation to allocate the demands amongst the sources and sinks to provide the most optimal solution (e.g. most fuel-efficient or greatest persistence). However, with minimal change, the architecture and interfaces described herein may permit the IAPSM to support any variation of application, up to and including an intelligent autonomous system incorporating full mission awareness, future power demand prediction, planning and dynamic re-optimisation in response to changing circumstances.

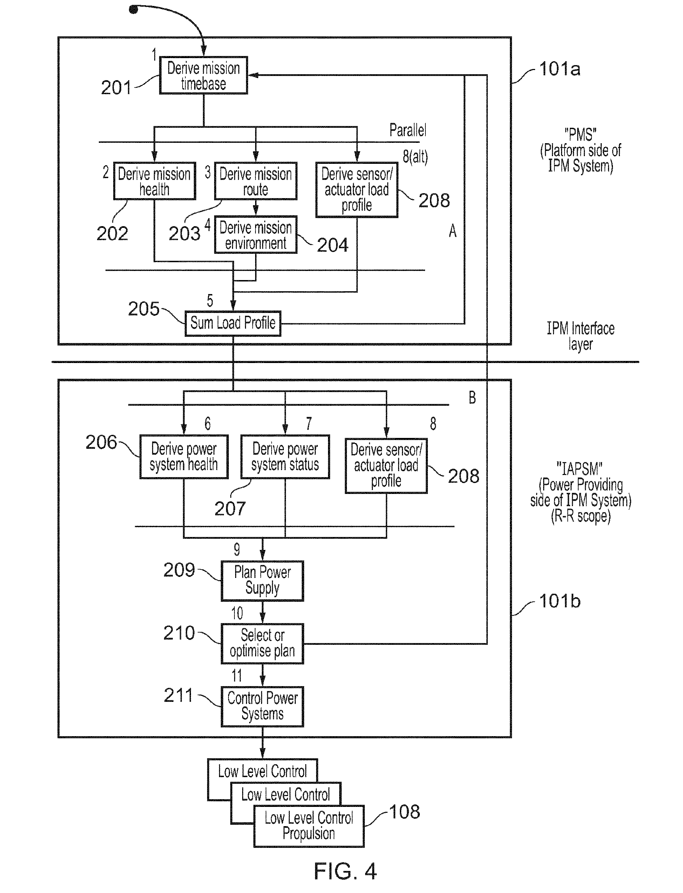

With reference to Figure 4, the functions 201 to 211 performed within the IPM 101 are depicted. As shown the functions may be carried out in an iterative sequence. Functions 201 to 205 may be carried out by the PMS 101a and these functions may predict the power demand. Functions 206 to 210 may be carried out within the IAPSM 101b side of the IPM 101 and these functions may deliver aspects of the remaining IPM functionality. However, it is to be noted that some aspects of these IPM functions may be executed outside of the IPM 101. For example, the low-level execution of the control power system 108 may be performed by a traditional FADEC, which takes its demands from the IAPSM, and the mission route may be derived in function 203 with the assistance of the route planner 104. The functions are described in more detail below.

Function 201 derives a common time-base as a reference for all of the remaining functions. The time-base defines the mission phases against time for a particular iteration of the planning and optimisation sequence. In the case of the vehicle being an aircraft, the time-base mission phases may comprise taxiing, taking-off, climbing, cruising, descending, landing, taxiing, idling and/or refuelling. Function 201 assigns a time duration to each of these phases. The durations for each phase (and hence the relative times for a given time-base) will be within the tolerances set by the ME 103. For example, the ME 103 may stipulate a limit on the duration of the take-off phase. The time-base may be changed in subsequent iterations. Varying these relative mission phase times (within the tolerances) gives one degree of freedom common to all functions within the sequence with which collective optimisation may be achieved.

After the common time-base has been established, function 202 may derive the vehicle health. Function 202 may use instantaneous and/or extrapolated health data relating to the vehicle to estimate the impact on energy consumption. For example, function 202 may identify a fuel leak in the fuel tanks or a slow retracting flap actuator, both of which will adversely affect fuel consumption. The health data may be derived outside the IPM 101. Function 202 generates a profile of energy drain against the time-base.

In parallel to function 202, function 203 may derive the mission route for the vehicle. (Function 203 may alternatively be carried out after or before function 202.) In deriving the vehicle route, function 203 may query the route planner 104, which may be external to the IPM 101. For a given performance criterion (e.g. energy efficiency, emissions output, completion time, persistence or operational life), function 203 may attempt to optimise a route using waypoints and the permitted tolerances provided by the ME 103. In other words, function 203 may carry out some local optimisation with the given waypoints, time-base, permitted tolerances and performance criterion against which to optimise. For example, the proposed optimal route will differ depending on whether the performance criterion is earliest arrival time or minimum energy usage (over the hill versus divert around it). There may be some degrees of freedom within which function 203 may optimise, for example a permitted deviation radius from a mandated waypoint. By contrast, there may be constraints on the optimisation within function 203, one of which will be the time per phase, including associated time tolerances on phase duration, from the mission time-base. The output from function 203 is a detailed route and a propulsive energy load profile against the mission time-base.

The energy load profile obtained from function 203 may be in non-dimensional terms and environmental data such as humidity, temperature and pressure may be required in order to express the load profile in dimensional terms. Thus, following function 203, function 204 may derive the mission environment and in doing so may analyse the terrain, tide, meteorological data etc. for the derived route and time-base, to estimate the impact on energy consumption. Function 204 generates a profile of energy drain against the time-base, based on the proposed mission route of function 203. Function 204 may also carry out some optimisation of the performance criterion by varying the vehicle route and/or time-base. For example, function 204 may request a different vehicle route, e.g. to avoid a thunderstorm or simply to avoid a region with high humidity and hence higher drag.

Function 205 sums the load profile from functions 203 and 204 and takes account of the energy drains from function 202. In an alternative arrangement, function 205 may also include in its summation the sensor and actuator load profiles derived by function 208 (function 208 is described in more detail below). Accordingly, function 205 builds a summary of the energy demand against the time-base and this energy demand may be subsequently used by the IAPSM 101b. Function 205 may also carry out some optimisation of the performance criterion by varying the vehicle route and/or time-base. For example, function 205 may instruct function 201 to change the time-base (denoted by feedback path A), e.g. to delay descent to avoid clouds or prolong the climb phase to reduce power required.

Having established the load profile for the vehicle in the PMS 101a, the time-base and load profile are sent to the power system domain, e.g. the IAPSM 101b. Within the IAPSM 101b function 206 derives the power system health. To estimate the impact on energy consumption and energy transformation, function 206 may use instantaneous and/or extrapolated health data relating to the power systems such as generator windings, gas turbine rotating parts, batteries, sensor payloads (e.g. cameras, radar etc). (Such health data may be derived outside the IPM 101.) In a manner similar to function 202 for the vehicle, function 206 generates a profile of the energy drain against the time-base for the power systems.

In parallel to or after function 206, function 207 derives the power system status. Function 207 evaluates the current levels of energy on board the vehicle in all of their forms and assesses the rate at which energy is being converted (e.g. both in terms of consumption and production rates). The energy evaluated by function 207 comprises propulsive thrust as well as other forms of energy required on board the vehicle. The power system status derived by function 207 is used to build a plan for the vehicle. The power system information is also used to compare the planned system behaviour against the actual behaviour. Any discrepancies arising from this comparison may be used to dynamically reconfigure and adapt the models, such that the plans for the vehicle continuously evolve or reconfigure to reflect reality.

Again, in parallel to or after functions 206 or 207, function 208 derives sensor and/or actuator load profiles. Function 208 uses the demand data for specific sensors and/or actuators during the mission phases in which they are required and their known characteristics to build a profile of expected energy demand against the mission time-base. The characteristics for the sensors and/or actuators are available to function 208 and may be stored locally, e.g. in the IPM 101, on the sensors and/or actuators or elsewhere on the vehicle. For example, the characteristics (e.g. start-up, shutdown, power draw profile) for each source and sink device may be stored in library files, which the system may be configured with pre-mission or the system may even automatically recognise each device as-fitted. In an alternative arrangement, function 208 may reside within the PMS 101a (i.e. vehicle scope of supply). Equally, aspects of function 208 may be carried out by both the PMS 101a and the IAPSM 101b, for example, aileron actuators may be accounted for within the PMS 101a and engine reverse thrust actuators may be accounted for in the IAPSM 101b.

Function 208 may also locally optimise within provided tolerances in order to avoid coincident demands for sensors and/or actuators where possible, for example to minimise load-peaks. For example, a satellite communication or navigation device may be scheduled to be activated at a particular time which would clash with the use of a ground-scanning radar. Function 208 may reschedule the satellite activation to avoid occurring at the same time as the radar use. The intensity of the sensors and/or actuators may also be varied by function 208, e.g. within a given tolerance. By way of example a de-icing system may run at maximum power for a demanded period, but it may be permissible to run the de-icing system at part-power for a longer period, which minimises the peak demand on the system.

After functions 206, 207 and 208, function 209 plans the power supply. Function 209 collates the summed load profile from functions 205 and 208, the power system health from function 206 and the power system status from function 207, and derives the best plan it can to optimise the performance criterion given the time-base. For example, function 209 may apportion generation and load such that each device is operating within its peak efficiency band, it may identify a need to proactively store excess generating capacity to address a short-term peak or it may even require the system to scavenge energy which was not previously on board the vehicle, e.g. by refuelling.

Once the power supply has been initially planned by function 209, function 210 may select or further optimise the plan. Accordingly, function 210 either selects and passes on a viable plan to control the power systems or provides an opportunity for optimisation, e.g. by varying the time-base via feedback path B.

However, whilst each of the aforementioned functions may perform as much local optimisation as it can, further optimisation of a particular function may conflict with the goals of other functions. By way of example, function 202 may identify that energy may be saved by reducing a loiter period (say mission phase 4) by four hours, to reduce the fuel lost by a leak it has identified. However, function 203 may have decided that in order to minimise energy consumption, it should plot a diversion around a mountain range, thus extending mission phase 4 by another hour. The extension of this phase by an hour would lead to encountering adverse weather and headwinds, as identified by function 204, which wants to reduce the mission by an hour to avoid this. Meanwhile function 209 may have identified the need to scavenge for an energy shortfall, which requires a five hour stop to replenish energy reserves. Thus, it can be seen that many conflicts or tensions may exist within the system.

One way to perform optimisation across sub-systems in tension like this would be to permit concurrent arbitration and negotiation between them, with each function operating as an agent with its own goals and the system having a collective aim to reach the optimum compromise. However, such systems are likely to be very calculation intensive and, as their behaviour is not possible to predict, they remain a significant challenge to certification, at least for air vehicles. Additionally to perform optimisation concurrently across all subsystems may require significant transfer of proprietary data, which may be viewed as undesirable by the subsystem developers. Nevertheless, an off-board implementation of such an arbitration system (hence without the constraints of flight-certification or processing time) could be utilised as a pre-mission optimisation, which could provide a pre-optimised plan to the vehicle as a starting point.

However, to enable on-board optimisation, an alternative optimisation approach may be considered. For example, each of the aforementioned functions in the process may generate both its output (as described already) and an optimisation pointer. The optimisation pointer may comprise a measure of the benefit to be had if a suggested course of action is taken. The optimisation pointers provided by each function may be in a common form or language. By way of an example, such a pointer could be in the form of: "Could save 10kWh if extend mission phase 5 by two hours; Reason: circumnavigate adverse terrain". Such optimisation pointers may be rendered in numerical advisories which can be quickly evaluated against each other (by function 210) to pick the best and/or easiest course of action to achieve some optimisation. The enabler for such an optimisation is a common parameter, which in this case is time or, more specifically, the time for each phase in the time-base.

Based upon the optimisation pointers it receives from the preceding functions, function 210 may identify and request a change to the time-base (via feedback path B in Figure 4) which potentially gives the largest benefit to the performance criterion. Once the sequence of functions has been re-run the outcome may be assessed. Such an iteration may be expected to deliver some improvement and, if so, the improved new plan and its corresponding time-base may be stored. However, there is a chance that such an iteration may have a negative effect on the performance criterion. If this is the case, an alternative optimisation pointer may be pursued, until an optimal solution is converged upon. The optimisation cycle may be halted, e.g. after a certain amount of time, number of iterations or once no further improvements can be found. The best available plan at that point may then be selected by function 210.

This alternative optimisation approach using optimisation pointers is less computationally intensive than using negotiating agents and may therefore be carried out during the vehicle's route. The use of optimisation pointers also avoids the aforementioned Intellectual Property Rights conflicts between the vehicle and power systems providers, since the providers may be more willing to provide optimisation pointers as opposed to full performance data.

Following function 210, function 211 controls the power systems. Function 211 takes the selected power plan for all of the power systems, and combines it with the immediate demand from the vehicle. In this way, the IPM 101 can provide power to address the immediate demand from the vehicle, whilst provisioning extra margin for expected transients or peaks or the need to store spare capacity to discharge later. The power system control applies to all aspects of power generation and consumption and as such applies to prime movers (e.g. internal combustion engines, gas turbines etc), generation sources (e.g. fuel cells, solar panels etc), energy storage (e.g. batteries, super-capacitors etc) and the loads (e.g. electrical, thrust, hydraulic, etc).

The individual demands from function 211 are passed on to low level controllers 108 outside the IPM 101. The demands may be in the form of a simple switch demand or a more complex demand comprising a parameter demand and sequencing to a controller of a complex machine (e.g. a FADEC for a gas turbine). It is at this stage that a more reactive control may take place, i.e. for occurrences which require a medium to rapid response. For example, a high criticality event, such as a shaft over-speed will be controlled within a very fast timeframe (i.e. milliseconds) by the FADEC or another independent system. By contrast, a failure of a gas turbine (e.g. flameout) must be accommodated in a medium to fast timeframe (i.e. seconds). This might involve taking up the load from the failed gas turbine with other available stored energy devices, while bringing another generator online. The same event would provoke a still-longer timeframe response (say in a matter minutes) in which the above-mentioned power planning loop begins optimising, and within an acceptable period generates a planned response in function 210, which subsequently supersedes the reactive one enacted in function 211.

The systems and methods described herein may be part of an integrated power management system, which may for example manage power generation and distribution amongst the available assets according to their individual health status and demands. The present disclosure is generic in nature and so may be readily applied to other autonomous (e.g. unmanned) applications. For example, the methods and systems described herein may also be applied to ship power generation optimisation, where there can be different sources of power, often multiple diesel and/or gas-turbine engines, which have different characteristics for optimal performance. The technology could be used to optimise in real-time to give best fuel performance, or best engine life, depending on the cost function applied. The present disclosure may also be applied to autonomous land vehicles and autonomous underwater vehicles.

In addition to autonomous systems, the present methods and systems may also be suitable for manned systems, where the technology offers reduced operator workload through management of tasks currently performed or supervised by pilots or operators. The pilot or operator workload may thus be reduced, thereby minimising the risk of error from overloaded operators, or reducing the manning requirements on a whole-system.

## Claims

1. A method of managing energy and/or power in a vehicle, the vehicle comprising:
one or more vehicle power systems adapted to control one or more power consuming components of the vehicle and one or more power producing components of the vehicle; and
one or more propulsive power systems adapted to control one or more propulsive power units of the vehicle,
wherein the method comprises:
(i) proposing a vehicle route for a predetermined mission and/or destination;
(ii) determining a time-based operational plan;
(iii) determining the power required by the vehicle power consuming components and the propulsive power required by the vehicle as a function of time during the operational plan;
(iv) determining the power required from the vehicle power producing components and the propulsive power required by the propulsive power units as a function of time during the operational plan; and
(v) varying the proposed vehicle route and/or the operational plan and repeating at least steps (iii) to (iv) to optimise a predetermined performance criterion for the vehicle.

2. The method of claim 1, wherein the method further comprises dividing the operational plan into one or more time phases, each phase representing a particular mode of operation for the vehicle, and varying the duration of one or more of the time phases to optimise the predetermined performance criterion.

3. The method of any preceding claim, wherein the method further comprises:
one or more of the vehicle power systems and/or propulsive power systems suggesting one or more variations to the operational plan in order to further optimise the predetermined performance criterion;
determining whether to adopt one or more of the suggested variations to the operational plan; and
varying the operational plan according to one or more of the suggestions from the systems to further optimise the predetermined criterion.

4. The method of any preceding claim, wherein the method further comprises varying the vehicle route independently of varying a scheduled use of the one or more of the propulsive power systems to optimise the predetermined performance criterion for the vehicle.

5. The method of any preceding claim, wherein the method further comprises either or more of:
varying a scheduled use of one or more of the vehicle power systems within the operational plan independently of varying a scheduled use of the one or more of the propulsive power systems to optimise the predetermined performance criterion for the vehicle; and,
varying a scheduled use of one or more of the propulsive power systems within the operational plan independently of varying a scheduled use of the one or more of the vehicle power systems to optimise the predetermined performance criterion for the vehicle.

6. The method of any preceding claim, wherein the method further comprises querying one or more power sensors to determine the vehicle power system and/or propulsive power system power levels; and accounting for the power levels when determining the power required from the vehicle power producing components and/or the propulsive power required from the propulsive power unit as a function of time during the operational plan.

7. The method of any preceding claim, wherein the method further comprises querying one or more health sensors to determine the vehicle health, vehicle power system health, power consuming component health, power producing component health, propulsive power system health and/or propulsive power unit health; and accounting for the health when determining the power required from the vehicle power producing components and/or the propulsive power required from the propulsive power unit as a function of time during the operational plan.

8. The method of any preceding claim, wherein the method further comprises carrying out any of the method steps in the preceding claims during the vehicle route and refining the vehicle route and/or operational plan to optimise the predetermined performance criterion for the vehicle.

9. The method of any preceding claim, wherein the method further comprises predetermining an optimal vehicle route and operational plan prior to commencing the vehicle route and using the predetermined optimal route and operational plan as a starting point in steps (i) and (ii) of claim 1 respectively.

10. The method according to any preceding claim, wherein the predetermined performance criterion is one of energy efficiency, emissions output, vehicle route completion time, persistence or the operational life of the vehicle and/or one or more of the vehicle components.

11. The method of any preceding claim, wherein the vehicle further comprises energy storage means and the method comprises accounting for the energy storage means when determining the power required from the vehicle power producing components and the propulsive power required by the propulsive power unit as a function of time during the operational plan.

12. The method of any preceding claim, wherein the vehicle is autonomous.

13. The method of any preceding claim, wherein the vehicle is an aircraft.

14. A controller adapted to carry out the method of any preceding claim.

15. A vehicle comprising the controller of claim 21.
